(19) Europäisches Patentamt
European Patent Office
Office européen des brevets

(11) **EP 2 268 468 B1**

(12) **FASCICULE DE BREVET EUROPEEN**

(45) Date de publication et mention
de la délivrance du brevet:
**14.09.2016 Bulletin 2016/37**

(21) Numéro de dépôt: **09730807.6**

(22) Date de dépôt: **08.04.2009**

(51) Int Cl.:
*B29B 9/02* *(2006.01)*   *B29B 17/04* *(2006.01)*
*C08J 5/18* *(2006.01)*   *C08K 3/08* *(2006.01)*
*C08K 3/22* *(2006.01)*

(86) Numéro de dépôt international:
**PCT/EP2009/054272**

(87) Numéro de publication internationale:
**WO 2009/124989 (15.10.2009 Gazette 2009/42)**

(54) **FILM PLASTIQUE EXTRUDE CHARGE EN PARTICULES METALLIQUES, PROCEDE D'OBTENTION ET UTILISATIONS DUDIT FILM**

EXTRUDIERTE, MIT METALLPARTIKELN GEFÜLLTE KUNSTSTOFFFOLIE, VERFAHREN FÜR ERHALT UND VERWENDUNG DIESER FOLIE

EXTRUDED PLASTIC FILM FILLED WITH METAL PARTICLES, METHOD OF OBTAINING SAME AND USES OF SAID FILM

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **09.04.2008 FR 0852394**

(43) Date de publication de la demande:
**05.01.2011 Bulletin 2011/01**

(73) Titulaire: **Toray Films Europe**
**01700 Saint-Maurice-de-Beynost (FR)**

(72) Inventeurs:
• **PENACHE, Maria, Cristina**
**F-38230 Chavanoz (FR)**
• **MARZE, Alain, Jean-Marie**
**F-69680 Chassieu (FR)**
• **LACRAMPE, Valérie**
**F-69390 Vernaison (FR)**
• **MAITRE, Eric, Jean**
**F-69280 Marcy L'Étoile (FR)**

• **CASATI, Pierre**
**F-69004 Lyon (FR)**

(74) Mandataire: **Cabinet Plasseraud**
**235 Cours Lafayette**
**69006 Lyon (FR)**

(56) Documents cités:
EP-A- 1 394 212   WO-A- 94/06849
FR-A- 2 572 732   FR-A- 2 870 477
JP-A- 3 258 835   US-A- 3 516 841
US-A- 4 528 235   US-A1- 2004 219 247
US-B1- 7 041 381

• LIETZ G: "Wiederaufbereiten von PE-Folienabfällen" KUNSTSTOFFE, CARL HANSER VERLAG, MUNCHEN, DE, vol. 73, no. 8, 1 août 1983 (1983-08-01), pages 414-418, XP002095855 ISSN: 0023-5563

**EP 2 268 468 B1**

## Description

### Domaine de l'invention

Le domaine de l'invention est celui des films plastiques notamment polyesters et/ou polyoléfines obtenus par (co)extrusion.

Ces films polyesters et/ou polyoléfines peuvent être notamment des films revêtus comprenant chacun au moins un film polyester et/ou polyoléfine et au moins une pellicule à base d'au moins un métal et/ou d'au moins un oxyde métallique.

La présente invention a pour objet un procédé de fabrication de matière première de film polyester et/ou polyoléfine ainsi qu'un procédé de fabrication dudit film polyester et/ou polyoléfine, contenant des particules de métal(aux) ou d'oxyde(s) métallique(s).

### Généralités - Problème technique - Art antérieur

Les films polyesters sont d'usage très répandu du fait de leurs excellentes propriétés bien connues de stabilité thermique, de stabilité dimensionnelle, de résistance chimique et d'énergie de surface relativement haute. Les films polyoléfines, notamment à base de polypropylène sont particulièrement intéressants pour leurs propriétés "barrière" à la vapeur d'eau et pour leur faible coût qui rendent ces matériaux très compétitifs par rapport aux polyesters.

Quand ils sont métallisés, ces films polyester et/ou polyoléfine sont par exemple recouverts par une couche métallique (par exemple aluminium, cuivre, nickel, or, argent, etc.) et sont généralement non transparents. La nature du métal et du polymère utilisés, de même que l'épaisseur, varient en fonction des applications.

Les applications de ces films sont notamment l'emballage alimentaire, l'emballage médical et les applications "dites" industrielles (e.g. isolation électrique, composants électroniques et films de protection, films optiques, films filtrant une partie du spectre lumineux, films pour l'agriculture ou le bâtiment) ou bien encore la décoration.

Concernant l'emballage, il peut s'agir de l'emballage de produits alimentaires depuis leur site fabrication/production jusqu'à leur arrivée chez le consommateur final. Ces films sont développés tout spécialement pour assurer une barrière soit aux gaz (oxygène, azote, hélium, vapeur d'eau, etc.) soit aux arômes. Il peut s'agir également d'un film d'emballage pour la cuisson des aliments au four micro-ondes.

Il peut s'agir aussi de l'emballage de protection de produits industriels divers tels que des appareils électroménagers, des pièces électroniques, etc.

S'agissant de la décoration, ces films sont utilisés pour créer des surfaces de type faux bois par exemple. Il existe aussi des applications dans lesquelles ces films polyester et/ou polyoléfine assurent une fonction anti-griffure.

Pour satisfaire aux exigences sans cesse renouvelées des différentes applications, il est souhaitable pour les fabricants de ce type de films, de concevoir de nouveaux produits.

Un autre problème auquel sont confrontés ces fabricants est relatif à l'économie des procédés industriels de fabrication (fusion/extrusion). Dans ce registre, la limitation des chutes de films et leur valorisation est une préoccupation.

La demande de brevet japonais JP-A-2194030 divulgue un film de PET résistant à l'abrasion et doté de bonnes performances en termes de défilement dans la chaîne de fabrication. Ce film PET est orienté de façon bi-axiale et comprend des particules métalliques (e.g. Fe, Co, Ni, Pd, Sn, Cu, Ag, Au, Al or Pb) de diamètre s'étendant de 0,01 à 3 $\mu$m, donc de forme sensiblement sphérique, et présentes à raison de 0,005 à 5% en poids. Ces particules forment à la surface du film des protubérances de hauteur comprise entre 20 et 650 nm.

Le brevet américain US 3 516 841 décrit un procédé de recyclage d'une structure laminée plastique-aluminium pour la fabrication d'autres produits. Le plastique exemplifié est l'acétate-butyrate de cellulose. Il peut s'agir également de PET. Selon ce procédé, la structure laminée plastique-aluminium est broyée, cisaillée pour séparer l'aluminium du plastique. Le mélange broyé de plastique et d'aluminium est ensuite soumis:

(i) soit à une étape de séparation plastique/aluminium broyé par décantation ou filtration dans une solution aqueuse de $CaCl_2$ (avec éventuelle transformation préalable de l'Al en $Al(OH)_3$, à l'aide d'une solution de $HgCl_2$) ou par filtration après incorporation du broyat plastique/aluminium dans une solution aqueuse de $HgCl_2$ apte à transformer l'Al en $Al(OH)_3$,
(ii) soit à une étape de moulage par injection à partir du mélange broyé de plastique et d'aluminium.

Le mélange de broyats solides plastique/aluminium récupéré à l'issue de la séparation (i) peut servir de matière première pour un moulage, comme dans l'étape (ii).

Ce procédé complexe nécessite un équipement lourd et coûteux. De surcroit, il ne divulgue pas la fabrication de films plastiques notamment polyesters et/ou polyoléfines obtenus par (co)extrusion.

La demande de brevet français FR 2 870 477 concerne un procédé de recyclage par extrusion "coumpoundage" de déchets de films polyoléfiniques non métallisés. Le procédé de recyclage en question mène à la formation de granulés composés de films polyoléfiniques imprimés et d'une charge minérale. Le produit obtenu est réutilisé dans la production de films d'épaisseur mince ou moyenne. Les déchets de films polyoléfiniques sont mis en lambeaux, en paillettes ou en flocons par des procédés de broyage et densification puis introduits dans une extrudeuse bi-vis, dans laquelle se fait l'ajout de charge minérale ou autres additifs.

De manière plus générale, on connaît le recyclage de films plastiques non métallisés, selon lequel les films sont broyés et les broyats obtenus sont transformés soit par un traitement d'agglomération à l'état pâteux, soit par extrusion bi-vis sous vide. Parfois, les broyats sont obtenus avec des appareillages fonctionnant sur le principe *"Vacurema"* (extrusion à partir de paillettes, agglomérats ou granulés) utilisant quatre étapes de transformation intégrées dans la même machine :

1) le compactage avec envoi du produit pâteux dans la fenêtre d'alimentation de la vis extrudeuse ;
2) le transport et le début d'extrusion dans une monovis à double diamètre ;
3) le dégazage ;
4) l'extrusion.

Jusqu'alors, le recyclage de films plastiques revêtus d'une pellicule e.g. métallique dans la fabrication de films, n'a pas été mis en oeuvre avec succès. En effet, de tels films métallisés ont des caractéristiques mécaniques de rigidité accrues et par conséquent ils se fractionnent de manière grossière (fragments de taille d'environ une dizaine de micromètres dans le plan du revêtement) et endommagent rapidement les lames de broyeurs. De plus, ces broyats grossiers colmatent rapidement les filtres polymère provoquant des pertes importantes de production. En outre, ces broyats grossiers conduisent immanquablement à des casses de film sur les machines de filmature. Par conséquent, la durée de fonctionnement sur machine est très réduite et les coûts de revient sont fortement accrus. Cela va à l'encontre du recyclage et par conséquent cela a coupé court au recyclage de films plastiques métallisés dans la fabrication de films.

Il existe donc une lacune s'agissant du recyclage de films revêtus d'une pellicule de métal ou d'oxyde de métal, pour fabriquer à nouveau des films plastiques en s'affranchissant des très sérieux problèmes de procédés évoqués ci-dessus, qui rendent rédhibitoires les coûts de fabrication de tels films.

**Objectifs de l'invention**

Un objectif essentiel de la présente invention consiste à fournir un nouveau procédé de fabrication de matière première ou de précurseur d'un film polyester et/ou polyoléfine, contenant des particules lamellaires à base d'au moins un métal et/ou d'au moins un oxyde métallique.

Un autre objectif essentiel de la présente invention consiste à fournir un nouveau procédé de fabrication d'un film polyester et/ou polyoléfine contenant des particules lamellaires à base d'au moins un métal et/ou d'au moins un oxyde métallique.

Un autre objectif essentiel de la présente invention consiste à fournir un nouveau procédé simple et économique de fabrication d'un film polyester et/ou polyoléfine ainsi que de sa matière première, contenant des particules lamellaires à base d'au moins un métal et/ou d'au moins un oxyde métallique.

Un autre objectif essentiel de la présente invention consiste à fournir un nouveau procédé de recyclage de chutes d'au moins un film revêtu comprenant au moins un film polyester et/ou polyoléfine et au moins une pellicule à base d'au moins un métal et/ou d'au moins un oxyde métallique.

**Description succincte de l'invention**

Ces objectifs, parmi d'autres, sont atteints par un film polyester et/ou polyoléfine obtenu par (co)extrusion ou par un procédé d'extrusion multicouches, caractérisé en ce qu'il contient des particules lamellaires à base d'au moins un métal et/ou d'au moins un oxyde métallique et en ce qu'il est obtenu par extrusion d'une matière première constituée en tout ou partie d'un broyât d'au moins un film revêtu comprenant au moins un film polyester et/ou polyoléfine et au moins une pellicule à base d'au moins un métal et/ou d'au moins un oxyde métallique.

Ce film polyester et/ou polyoléfine chargé en particules lamellaires métalliques et/ou à base d'oxyde(s) métallique(s), est obtenu par un procédé de fusion/extrusion classique. Les particules lamellaires sont incluses dans la masse du film de manière homogène. Ce film présente donc une structure, une composition et des caractéristiques singulières. En particulier, ce film est doté de très bonnes propriétés de transfert thermique, d'un bon effet barrière à la lumière et aux gaz et également d'une bonne résistance au feu (autoextinguible). Il s'est également avéré avoir de bonnes propriétés de déchirabilité linéaire.

Suivant un premier aspects, l'invention concerne un procédé de production de matière première (ou précurseur) d'un film polyester et/ou polyoléfine qui contient des particules lamellaires à base d'au moins un métal et/ou d'au moins un oxyde métallique, en particulier du film tel que défini supra. Cette matière première est constituée en tout ou partie d'un broyat de film (e.g. polyester et/ou polyoléfine) métallisé. Ce procédé est caractérisé en ce qu'il comprend les étapes suivantes :

A. le broyage, de préférence de chutes, d'au moins un film revêtu comprenant au moins un film(s) polyester(s) et/ou polyoléfine(s) et au moins une pellicule à base d'au moins un métal et/ou d'au moins un oxyde métallique, de manière à obtenir des paillettes,

B. éventuellement le compactage des paillettes issues du broyage en agglomérats,

C. la fusion des paillettes ou des agglomérats issus du compactage, de préférence suivie d'une filtration visant à éliminer les particules de métal et/ou d'au moins un oxyde métallique, dont la plus grande dimension (L) est supérieure ou égale à 10 $\mu$m, de préférence supérieure ou égale à 5 $\mu$m, et, plus préférentiellement encore supérieure ou égale à 3 $\mu$m,

D. la transformation de la masse solidifiée en éléments discrets - broyat - constituant la matière première, de préférence en granulés.

Suivant encore un autre de ses aspects, l'invention concerne un procédé de fabrication d'un film polyester et/ou polyoléfine qui contient des particules lamellaires à base d'au moins un métal et/ou d'au moins un oxyde métallique, en particulier du film tel que défini supra, caractérisé en ce qu'il comprend les étapes suivantes :

A. le broyage, de préférence de chutes, d'au moins un film revêtu comprenant au moins un film(s) polyester(s) et/ou polyoléfine(s) et au moins une pellicule à base d'au moins un métal et/ou d'au moins un oxyde métallique, de manière à obtenir des paillettes,

B. éventuellement le compactage des paillettes issues du broyage en agglomérats,

C. la fusion des paillettes ou des agglomérats issus du compactage, de préférence suivie d'une filtration visant à éliminer les particules de métal et/ou d'au moins un oxyde métallique, dont la plus grande dimension (L) est supérieure ou égale à 10 $\mu$m, de préférence supérieure ou égale à 5 $\mu$m, et, plus préférentiellement encore supérieure ou égale à 3 $\mu$m,

D. le refroidissement/solidification de cette masse en fusion,

E. la transformation de la masse solidifiée en éléments discrets, de préférence en granulés,

F. la fabrication du film par extrusion/fusion d'un mélange contenant une quantité Qb (en % en poids) de ces éléments discrets, de préférence de ces granulés, issus de l'étape F,

G. le refroidissement du film issu de l'étape F, de préférence à l'aide d'un système de placage et, plus préférentiellement encore, un système de placage électrostatique ou à lame d'air sur un tambour de refroidissement ;

cette étape F et cette étape G étant mises en oeuvre à la suite de l'étape E (mode continu) ou après stockage des éléments discrets, de préférence des granulés, issus de l'étape E (mode discontinu).

L'invention concerne également un procédé de fabrication d'un film polyester et/ou polyoléfine tel que défini supra, caractérisé en ce qu'il comprend en outre les étapes suivantes :

H. l'étirage longitudinal et transversal du film issu de l'étape F ou G,

I. la thermofixation du film issu de l'étape H à une température supérieure ou égale à 150°C, de préférence encore comprise entre 180 et 250°C et, plus préférentiellement encore à 240°C, lorsque le film est constitué de polyester, et à une température est supérieure ou égale à 120°C, de préférence encore comprise entre 130 et 200°C et, plus préférentiellement encore à 150°C, lorsque le film est constitué de polyoléfine ;

ces étapes H & 1 étant mises en oeuvre à la suite de l'étape G (mode continu).

Ces procédés simples et économiques donnent accès à des possibilités très intéressantes de recyclage et/ou de valorisation de chutes de film polyester et/ou polyoléfine métallisé. En particulier, ces procédés permettent une forte réduction des coûts de revient.

Ces procédés permettront aussi le recyclage et/ou la valorisation de chutes de film de type biodégradable, et/ou compactable métallisé.

Suivant encore un autre de ses aspects, la description concerne l'utilisation du film obtenu par le procédé selon l'invention, pour le traitement thermique de produits, pour l'emballage, ou pour la décoration et/ou la protection de supports divers.

## Description détaillée de l'invention

### Les particules

Les particules lamellaires utilisées comme charge dans le film de l'invention ont des caractéristiques dimensionnelles judicieusement sélectionnées. Elles répondent ainsi à un facteur de forme ($F = L/e$) défini comme le rapport entre la plus grande dimension (L) dans le plan de la particule et son épaisseur (e) :

$$10 \leq F \leq 1000, \text{ de préférence } 50 \leq F \leq 500.$$

Par exemple (en $\mu$m) :

- $0,01 \leq L \leq 500$
- de préférence $0,1 \leq L \leq 100$
- et, plus préférentiellement encore $1 \leq L \leq 20$ ;

et

- $0,001 \leq e \leq 1$
- de préférence $0,01 \leq e \leq 0,5$
- et, plus préférentiellement encore $0,01 \leq e \leq 0,3$, voire $0,01 \leq e \leq 0,3$, e étant par exemple de l'ordre 0,05.

Les particules lamellaires ont ainsi de préférence une épaisseur (e) sub-micrométrique. La forme de ces particules sensiblement planes peut être variée, notamment régulière (rectangle, carré, triangle, trapèze, oblong ou ovoïde) ou irrégulière.

De préférence, ces particules lamellaires à base d'au moins un métal et/ou d'au moins un oxyde métallique ou à base d'oxydes métalliques sont disposées de façon organisée et uniforme au sein du film. Ainsi, suivant une caractéristique remarquable, ces particules lamellaires sont incluses dans la masse du film, non pas en amas mais en feuillets. Plus précisément et avantageusement, les particules lamellaires sont sensiblement comprises dans un ou plusieurs plans parallèles aux faces du film.

De préférence, les particules d'aluminium sont distribuées de manière homogène et statistiquement dans le plan du film polyester (e.g. PET) et/ou polyoléfine (e.g. polypropylène).

Sur le plan quantitatif, le taux Tx de particules lamellaires (exprimé en % en poids) est défini comme suit :

$$10^{-3} \leq Tx \leq 10, \text{ de préférence } 10^{-2} \leq Tx \leq 5$$

Les propriétés du film varient en fonction de Tx. Ainsi, l'aspect du film, les propriétés mécaniques et/ou optiques, et les propriétés dans les applications, varient de façon corrélée avec ce taux, qui lui-même est directement liée à la quantité de broyat (Qb) contenue dans la matière première extrudée pour fabriquer le film. Dans le présent exposé, on indiquera également par extension, qu'un tel film contient une quantité Qb de broyat.

Sur le plan qualitatif, le métal des particules lamellaires est choisi dans le groupe comprenant : l'aluminium, le cuivre, le nickel, l'argent, l'or, etc., et leurs alliages, tandis que l'oxyde métallique desdites particules lamellaires est choisi dans le groupe comprenant : les oxydes de l'aluminium, de silicium et des métaux du groupe précité et leurs mélanges.

L'aluminium et/ou ses oxydes est l'un des matériaux retenu préférablement dans le cadre de l'invention.

### Le film et sa matière première

Suivant un mode préféré de mise en oeuvre de l'invention, parmi d'autres, le film polyester et/ou polyoléfine tire une partie de ses caractéristiques avantageuses du fait qu'il est obtenu par extrusion d'une matière première constituée en tout ou partie d'un broyat d'au moins un film revêtu comprenant au moins un film polyester et/ou polyoléfine et au moins une pellicule à base d'au moins un métal et/ou d'au moins un oxyde métallique.

De préférence, le film revêtu à partir duquel on produit le broyat, comprend du film revêtu à recycler, de préférence des chutes de film revêtu.

On touche là à un problème récurrent de la fabrication des films polymères qui est le recyclage des quantités non négligeables de chutes de film. En l'espèce, il s'agit e.g. de chutes de films pelliculés par une couche de métal ou d'oxyde métallique, communément dénommés films polymères métallisés. En pratique, il peut s'agir par exemple de recycler les déchets produits lors de la fabrication de films polyesters (PET) et/ou polyoléfine (e.g. polypropylène) revêtus chacun sur l'une de ses faces d'une pellicule fine d'aluminium obtenue par évaporation sous vide. Un tel recyclage permet de baisser de manière considérable le prix de revient des films polymères, que ceux-ci soient eux-mêmes métallisés ou non. Les revêtements des films à recycler qui forment la matière première des films selon la présente invention, sont par exemple des revêtements inorganiques minces, obtenus de préférence par un procédé sous vide, qui en plus de la modification des propriétés de surface du film, ajoutent une fonction (par exemple barrière aux gaz). Un film revêtu selon l'invention est donc un film recouvert d'une pellicule superficielle, ladite pellicule ayant une épaisseur nettement inférieure à celle du support sur lequel elle se trouve, en l'occurrence le film. De préférence, cette pellicule est sub-micrométrique. Cette pellicule sensiblement moins épaisse que le support ne peut pas être machinée en elle-même car elle est très fragile. Par conséquent, il n'est pas possible de l'utiliser sans le support (film) pour la transformation. Ainsi, le revêtement du film à recycler qui peut former la matière première des films selon l'invention, diffère d'un "laminat" qui correspond à un ensemble de couches différentes ayant chacune leur existence physique propre. Il est obtenu par des technologies de type encollage, contre collage, extrusion couchage, complexage, etc. Suivant une caractéristique préférée de l'invention, le film revêtu "métallisé" à partir duquel on produit le broyat, comprend une couche en film polyester et/ou polyoléfine de même nature que le film polyester et/ou polyoléfine visé.

Cette hypothèse préférée mais non limitative est celle qui sera envisagée à titre d'exemple dans la description plus détaillée du procédé selon l'invention.

Le film revêtu "métallisé" est par exemple un film PET revêtu sur l'une de ses faces d'une pellicule fine d'aluminium obtenu par évaporation sous vide.

Ce mode préféré de mise en oeuvre de l'invention a pu être élaboré notamment grâce à des moyens technologiques spécifiques qui sont compris dans le procédé selon l'invention, détaillé ci-après.

Par ailleurs, ce film conforme au mode préféré de mise en oeuvre de l'invention en est obtenu par extrusion d'une matière première comprenant une quantité de broyat (Qb en % en poids) telle que $Qb \leq 100$. Dans ce cas, la matière première du film selon l'invention est complétée par une autre matière première différente du broyat et comprenant par exemple du polyester et/ou de la polyoléfine et/ou un autre polymère, de préférence exempt ou quasi-exempt (e.g. inférieur ou égal à 0,1% p/p) de particules métalliques. Pour l'extrusion, ces matières premières du film se présentent généralement sous forme de granulés.

Deux classes de film (classes 1 et 2) ont pu être identifiées dans le cadre de l'invention, en fonction du Qb de la matière première extrudée pour fabriquer le film.

La classe 1 est telle que :

- $20 < Qb \leq 100$
- de préférence $25 \leq Qb \leq 99$
- et, plus préférentiellement encore $30 \leq Qb \leq 95$.

Cette classe 1 se caractérise notamment par les propriétés suivantes : déchirabilité linéique améliorée, aspect décoratif, amélioration de l'accrochage d'un revêtement, facilité de cuisson aux micro-ondes.

La classe 2 est telle que :

- $10^{-1} \leq Qu \leq 20$
- de préférence $1 \leq Qb \leq 20$
- et, plus préférentiellement encore $2 \leq Qb \leq 20$.

Cette classe 2 se caractérise notamment par les propriétés suivantes : propriétés mécaniques identiques aux films sans adjonction de broyat, bonne transparence, coûts de fabrication réduits.

Le film selon l'invention peut être constitué de plusieurs couches coextrudées (nombre total de couches = 2 à 5 par exemple) ou obtenues par un procédé d'extrusion multicouches (nombre total de couches = 2 à 10.000 par exemple). Il est possible de faire varier le pourcentage de particules métalliques, donc de % de broyat Qb de départ, dans tout ou partie de ces couches.

En outre, le pourcentage de particules métalliques, donc de % de broyat Qb de départ, peut être différent d'une couche à l'autre. On fait varier ainsi le pourcentage de particules métalliques dans l'épaisseur du film. Certaines couches de ces films multicouches peuvent ne pas contenir de particules (Qb = 0% dans la matière première extrudée de départ pour fabriquer la couche considérée).

Cette quantité Qb n'est pas la charge en particules lamellaires du film selon l'invention. En effet, le broyat est constitué pour partie de particules métalliques et pour partie du polymère (de préférence polyester et/ou polyoléfine) formant le film revêtu ("métallisé") recyclé. On accède aisément à la charge totale en particules lamellaires du film par exemple à partir des données sur la surface et l'épaisseur du métal et de polymère des chutes recyclées. Une alternative pour la quantification de la charge métallique peut être une mesure par fluorescence X.

Selon une caractéristique remarquable de l'invention, le film polyester et/ou polyoléfine est bi-étiré. Selon une variante de l'invention, le film peut être bi-étiré isotropique (propriétés similaires dans toutes les directions) ou bi-étiré tensilisé (propriétés spécifiques dans une direction particulièrement le sens machine) ou bi-étiré balance.

Selon une autre caractéristique remarquable de l'invention, le film polyester et/ou polyoléfine a une épaisseur (e) comprise entre 3 et 350 microns, mieux encore en pratique entre 8 et 50 $\mu$m, de préférence entre 8 et 36 $\mu$m, et, plus préférentiellement encore entre 4 et 23 $\mu$m. Le film polyester a préférablement une épaisseur de 12 $\mu$m, le film polyoléfine a préférablement une épaisseur de 18 $\mu$m. Le film selon l'invention peut être revêtu ou non revêtu c'est à dire qu'il comprend ou non au moins un revêtement sur au moins une de ses faces. Par revêtement, on désigne e.g. une couche de polymère (par exemple en polyester et/ou polyoléfine) ou une couche à base d'un matériau non polymère par exemple un métal ou un oxyde métallique.

Avantageusement, ledit revêtement est obtenu par coextrusion, enduction, vernissage, extrusion couchage, couchage par fusion ("hot melt"), évaporation sous vide ou tout autre procédé de dépôt sous vide comme le dépôt chimique sous vide.

Dans une forme d'exécution, le revêtement est de nature métallique et l'adhésion de ce revêtement sur le film polyester et/ou polyoléfine de base chargé en particules lamellaires (adhésion mesurée selon les recommandations AIMCAL TP-105-92 (Metallizing Technical Reference éditée par Association of Industrial Metallizers, Coaters and Laminators) est supérieure ou égale à 0,05 N/38 mm, de préférence supérieure ou égale à 0,1 N/38 mm, et, plus préférentiellement encore supérieure ou égale à 0,2 N/38 mm.

Il a en effet pu être constaté que les revêtements de quelque nature qu'ils soient, adhèrent particulièrement bien sur le film selon l'invention.

Cette propriété d'adhésion est plus marquée dans les films de classe 1 tels que définis ci-dessus. Plus Qb est élevée, plus la propriété d'adhésion notamment vis-à-vis des métaux du film selon l'invention est renforcée. Par exemple, la force d'adhésion d'une pellicule d'aluminium sur un film PET chargé de particules lamellaires dont le Qb = 60, est améliorée d'un facteur 4 par rapport à celle obtenue entre la même pellicule et un film PET non chargé de particules lamellaires.

Pour améliorer encore ces propriétés d'adhésion, il est envisageable qu'au moins une partie de la surface du film selon l'invention soit soumise à un traitement par une décharge électrique de type corona et/ou à un traitement de type plasma.

Ledit traitement de type corona est une décharge corona sous air ambiant à la pression atmosphérique ou sous gaz à des pressions partielles élevées, préférablement entre 100 mbar et 3000 mbar, encore plus préférablement à la pression atmosphérique.

Ledit traitement de type plasma peut être effectué à l'aide d'une décharge plasma sous vide, à des pressions partielles basses, préférablement entre $10^{-5}$ mbar et 1 mbar, encore plus préférablement entre $10^{-3}$ et $10^{-1}$ mbar.

Le film chargé en particules lamellaires selon l'invention peut être en polyester et/ou en polyoléfine. Les polyesters et les polyoléfines concernés sont des homopolymères ou des copolymères. Il peut s'agir de co(polyester(s))(polyoléfine(s)).

Film polyester

Les films polyesters plus spécialement visés sont par exemple des polyesters aromatiques et particulièrement le polyéthylène téréphtalate PET (e.g. à orientation bi-axiale) ou le polyéthylène naphtalate (PEN) ou le polybutylène téréphtalate (PBT).

Quand le film polyester est un polyester aromatique, il s'agit de préférence d'un polyester aromatique essentiellement linéaire, obtenu à partir d'un acide dibasique aromatique ou d'un ester dérivé dudit acide, et d'un diol ou d'un ester dérivé de ce diol.

Avantageusement, le film polyester mis en oeuvre est à orientation bi-axiale.

Le polyester constituant le film de base peut être choisi parmi les polyesters auxquels on fait appel habituellement pour l'obtention de films semi-cristallins bi-orientés. Il s'agit de polyesters linéaires filmogènes, cristallisables par orientation et obtenus de façon usuelle à partir d'un ou plusieurs acides aromatiques dicarboxyliques ou leurs dérivés (esters d'alcools aliphatiques inférieurs ou halogénures par exemple) et d'un ou plusieurs diols (glycols) aliphatiques.

Comme exemples d'acides aromatiques, on peut citer les acides phtalique, téréphtalique, isophtalique, naphtalènedicarboxylique-2,5, naphtalène-dicarboxylique-2,6. Ces acides peuvent être associés à une quantité mineure d'un ou plusieurs acides dicarboxyliques aliphatiques ou cycloaliphatiques, tels que les acides adipique, azélaïque, tétra- ou hexahydroteréphtalique.

Comme exemples non limitatifs de diols aliphatiques, on peut citer l'éthylèneglycol, le propanediol-1,3, le butanediol-1,4. Ces diols peuvent être associés à une quantité mineure d'un ou plusieurs diols aliphatiques plus condensés en carbone (néopentylglycol par exemple) ou cycloaliphatiques (cyclohexanedimethanol).

Préférentiellement, les polyesters filmogènes cristallisables sont des polytéréphtalates ou des polynaphtalènedicarboxylates d'alkylènediol et, en particulier, le polyterephtalate d'éthylèneglycol (PET) ou de butanediol-1,4 ou des copolyesters comportant au moins 80 % en moles de motifs teréphtalate d'éthylèneglycol. Avantageusement, le polyester est un polytéréphtalate d'éthylèneglycol dont la viscosité intrinsèque mesurée à 25°C dans l'ortho-chlorophénol est comprise entre 0,6 et 0,75 dl/g.

Les films de polyester bi-orientés sont, par exemple :

➢ soit constitués de polyéthylène téréphtalate,
➢ soit il s'agit de mélanges ou non de copolyesters polyéthylène téréphtalate contenant des unités cyclohexyl diméthylol à la place des unités éthylène (voir brevet US-A-4,041,206 ou EP-A-0408042),
➢ soit composés de mélanges ou non de copolyesters polyéthylène téréphtalate avec une partie de polyester présentant des unités isophtalate (voir brevet EP-B-0515096),
➢ soit constitués de plusieurs couches de polyesters de natures chimiques différentes, comme décrit précédemment, obtenus par coextrusion.

Des exemples spécifiques de polyesters aromatiques sont notamment le polyéthylène téréphtalate (PET), le polyéthylène isophtalate, le polybutylène téréphtalate, le poly-(diméthyl-1,4-cyclohexylènetéréphtalate) et le polyéthylène-2,6-naphtalènedicarboxylate.

Le polyester aromatique peut être un copolymère de ces polymères ou un mélange de ces polymères avec une petite quantité d'autres résines, par exemple et sans être limitatif, le polybutylène téréphtalate (PBT). Parmi ces polyesters, le polyéthylène téréphtalate (PET) et le polyéthylène-2,6-naphtalènedicarboxylate (PEN) sont particulièrement préférés car ils offrent un bon équilibre entre les propriétés physiques, les propriétés mécaniques et les propriétés optiques.

Les polyesters peuvent contenir (au moins en surface) une charge C' appropriée aux besoins, différente des particules lamellaires, comme par exemple une charge pour limiter le collage inter spires du film lors de l'enroulement. Cette charge C' est avantageusement incluse dans le polyester afin de modifier ses propriétés de surface. Comme exemples de charges C' qui sont connues comme lubrifiants pour film polyester, on peut citer le carbonate de calcium, l'oxyde de calcium, l'oxyde d'aluminium, le dioxyde de titane, le kaolin, la silice, l'oxyde de zinc, le noir de carbone, le carbure de silicium, l'oxyde d'étain, les particules de résine acrylique réticulé, les particules de résine polystyrène réticulé, des particules de résine mélanine réticulé, des particules de résine silicone réticulé ou analogue. De préférence, on utilise des charges C' de type silice et/ou carbonate. Les particules de charge C' sus-décrites peuvent avoir un diamètre moyen compris entre 0,05 et 60 microns et sont présentes de préférence dans une quantité comprise entre 0 et 140.000 parties par million en poids par rapport à la masse totale du polyester (e.g. aromatique) et plus particulièrement entre 0,5 et 6 microns et sont présentes de préférence dans une quantité comprise entre 200 et 1.500 parties par million en poids par rapport à la masse totale du polyester (e.g. aromatique). Dès lors qu'un film à haute transparence est souhaité, il est préférable d'éviter l'incorporation massive de charge.

Par ailleurs, outre la charge C', d'autres additifs peuvent être ajoutés aux polyesters si besoin est, à savoir notamment un colorant, un agent antistatique, un azurant optique, un antioxydant, un agent lubrifiant organique, un additif anti-UV ou ignifugeant, un catalyseur, ou tout autre additif. L'additif anti-UV peut être choisi parmi plusieurs cas de produits connus tels que ceux décrits dans l'ouvrage "Additives for plastics on book, John Murphy, 2nd Edition 2001, Elsevier Advanced Technology". A titre d'exemple d'additifs anti-UV, on peut citer ceux de la famille des anti-oxydants ou absorbeurs comme les benzophénones, les benzotriazoles, les benzoxazinones et les triazines ; et ceux de la famille des "Hindered amine light stabilizers" (HALS), seuls ou en combinaison avec des antioxydants. Ces additifs anti-UV servent à contrer les effets des UV et de l'oxygène sur les films polyesters.

Film polyoléfine

Les films polyoléfines plus spécialement visés sont par exemple des polyoléfines aliphatiques comme le polyéthylène ou le polypropylène ou des polyoléfines aromatiques comme le polystyrène.

Les films de polyoléfines aliphatiques sont de préférence faits de polymères d'oléfine mono-$\alpha$ comprenant 2 à 8 atomes de carbone et en particulier 2 à 4 atomes de carbone par molécule. Le polymère peut être un homopolymère ou un copolymère de deux ou plusieurs des oléfines, par exemple les oléfines suivante : éthylène, propylène, butène-1, hexène et 4-méthylpentène 1.

Les polypropylènes sont utilisés largement dans l'emballage et dans diverses industries : automobile, électroménager, sanitaire, textile, ameublement, etc. Certaines propriétés des polypropylènes sont intéressantes dans la réalisation des films, à savoir leur température de fusion (130 à 170°C) et leur module d'Young (70 à 1.600 MPa) élevés, la possibilité d'obtenir des produits de résistance mécanique exceptionnelle (300 à 400 MPa) par mono ou bi-orientation, la possibilité d'obtenir des polypropylènes résistant au choc à basses températures et à température ambiante ainsi que des produits chargés ou renforcés par des fibres de verre.

Les polypropylènes peuvent être :

- des homopolymères dont l'isotacticité est maximale (92 à 99%), la cristallinité est maximale, la température de fusion et le module de Young sont élevés mais la résistance au choc faible,
- des copolymères statistiques avec généralement 1,5 à 7% en masse d'éthylène polymérisé, plus facilement thermoscellables, plus résistants aux chocs que les homopolymères mais avec un module de Young, une température de fusion et une densité plus faibles,
- des copolymères séquencés ou à blocs dont le taux d'élastomère dans le produit varie de 10 à 35% en masse, la résistance au choc est élevée même à basse température mais avec un module de Young et une température de fusion inférieurs à ceux des homopolymères.

Les propriétés des polypropylènes, qu'ils soient des homopolymères ou des copolymères, dépendent de leur cristallinité, de leur masse moléculaire, de leur distribution moléculaire ainsi que de leur composition chimique.

Un matériau particulièrement adapté pour les films de la présente invention est le polypropylène, particulièrement un polymère de propylène à haut poids moléculaire stéréorégulier et à prédominance cristalline. En variante, un copolymère de propylène avec plus de 20% d'une autre oléfine (par exemple, l'éthylène) peut être utilisé pour la présente invention.

Les films de polypropylène peuvent être orientés de façon monoaxiale ou bi-axiale. En général, pour les films biorientés, le polypropylène est extrudé (entre 180 et 300°C) à travers une filière plate, puis refroidi sur un cylindre froid. Ensuite le film est réchauffé à une température inférieure à sa température de fusion puis étiré successivement dans le sens de l'extrusion et dans le sens transversal. Les taux d'étirage varient de 5 à 7 dans les deux directions. La résistance à la rupture de ce type de film augmente considérablement (environ 400 MPa) alors que son allongement à la rupture devient très faible, de 10 à 30%. Un film de polypropylène biorienté est dans la majorité des cas transparent.

Pour les applications industrielles, le polypropylène a un taux d'isotacticité de l'ordre de 92 à 98%, ce qui signifie que le polymère "isotactique" comporte aussi quelques séquences syndiotactiques ou atactiques. Les polypropylènes utilisés pour les films selon la présente invention ont généralement une isotacticité d'environ 90% ce qui leur confère de bonnes propriétés de résistance à la traction, au stress et à la déformation imposée par les machines de mise en forme des produits. De préférence, pour une meilleure résistance et transformation, les polypropylènes utilisés sont des polypropylènes isotactiques hautement cristallins entre environ 95% et environ 98%. La résistance au choc du polypropylène dépend de sa cristallinité, de la masse moléculaire et de la composition du produit. Une polyoléfine particulièrement adaptée à la présente invention et préférée est le polypropylène isotactique avec une masse volumique entre 0,86 et 0,92 g/cm$^3$ et un indice de fluage de 1 à 15 g/10 min tel que déterminé selon ASTM D1238 (conditions 230°C et 2,16 kg). Les polypropylènes utilisés peuvent être aussi des résines à forte isotacticité (de préférence supérieure à 90%) et forte cristallinité. Ils peuvent également être traités de préférence sous atmosphère $CO_2$, $N_2$, ou un mélange de celles-ci.

Des exemples de polypropylènes commerciaux hautement cristallins adaptés pour la production de films résistants à base d'huile sont FINA® 3270, EXXON® 1043N, HUNTSMAN® 6310 et AMOCO® 9117. Ces résines ont de préférence un point de fusion à environ 163-167°C, une température de cristallisation d'environ 108-126°C, une chaleur de fusion d'environ 86-110 J/g, une chaleur de cristallisation d'environ 105-111 J/g.

Le film de polypropylène peut également contenir éventuellement au moins un additif de résine hydrocarbure. Bien qu'il ne soit pas indispensable, l'ajout de cet additif aide à l'orientation biaxiale du film en offrant une fenêtre de transformation plus large, en terme de températures de transformation pour le sens machine (MD) et en particulier pour l'orientation de la direction transverse (TD).

Les films de polypropylène sont métallisables sous vide et dans certaines conditions, métallisables par galvanoplastie, après attaque par bain sulfochromique ou traitement plasma par exemple.

**Production du broyat formant tout ou partie de la matière première du film selon l'invention et fabrication du film amorphe ou bi-étiré selon l'invention**

Comme expliqué ci-dessus, le film selon l'invention est obtenu par (co)extrusion ou par un procédé d'extrusion multicouches d'une matière première constituée en tout ou partie d'un broyat d'un film de polyester et/ou de polyoléfine revêtu d'une pellicule métallique (e.g. dans le cadre du recyclage de chutes de ce type de film métallisé).

L'invention concerne ainsi d'une part, la production du broyat formant tout ou partie de la matière première et d'autre part la fabrication d'un film amorphe ou bi-étiré selon l'invention. Comme exposé ci-dessous, les étapes A à E permettent de produire des éléments discrets, de préférence des granulés, susceptibles d'être stockés avant d'être mis en oeuvre dans la fabrication du film selon l'invention (mode discontinu). Ces éléments discrets, de préférence ces granulés, sont des produits intermédiaires commercialisables en tant que tels, à titre de matière première (ou précurseur) du film selon l'invention.

A partir de ces produits intermédiaires, les étapes F et G permettent d'obtenir un film amorphe selon l'invention. Les étapes H et I réalisées après les étapes F et G permettent la fabrication d'un film bi-étiré selon l'invention.

Dans le mode discontinu, on met en oeuvre les étapes A à E, on stocke le broyat un certain temps, puis on met en oeuvre les étapes F et G, voire les étapes H et I.

Dans le mode continu, les étapes A à G, voire A à I s'enchaînent.

On détaille ci-après les étapes A à I.

Etape A :

Le broyage est effectué selon le processus suivant : le(s) film(s) en torche et/ou en lisières est (sont) introduit(s) dans un broyeur à lames rotatives qui le(s) découpent en paillettes. On utilise, de préférence, un broyeur à lames métalliques ou céramiques (plus préférentiellement encore céramiques) pour sa robustesse vis-à-vis des films.

Etape B :

Le compactage des paillettes issues du broyage est réalisé dans un agglomérateur mécanique qui permet d'obtenir un produit densifié ayant approximativement un aspect torsadé et spongieux.

Etapes C, D et E :

La fusion de la fraction polymère des agglomérats issus du compactage est réalisée de préférence par extrusion sous vide. Dans certains cas, l'étape d'agglomération n'est pas nécessaire et la fusion est réalisée directement sur des paillettes.

La fusion est réalisée sur des extrudeuses intégrées permettant à la fois d'améliorer le compactage des polymères et de les refondre sous vide dans de très bonnes conditions de transformation (température, absence de dégradation oxydante, etc.). Une filière à joncs permet d'extruder des fils de polymère qui par la suite sont trempés rapidement dans l'eau puis coupés en granulés.

Cette machine comporte de préférence un équipement de filtration spécialement étudié pour permettre un processus autorisant le traitement des polymères à particules métalliques.

L'équipement de filtration visant à éliminer les particules de métal et/ou d'au moins un oxyde métallique, dont la plus grande dimension (L) est supérieure ou égale à 10 $\mu$m, de préférence supérieure ou égale à 5 $\mu$m, et, plus préférentiellement encore supérieure ou égale à 3 $\mu$m.

Cet équipement contient par exemple un filtre Vacurema® particulier, de maille contrôlée, de préférence d'environ 30$\mu$m, du type multipore ou grille mesh ou dans certains cas microporeux.

Les moyens technologiques spécifiques sont par exemple et sans être limitatifs :

- une ligne de recyclage de type EREMA® d'une capacité au moins égale à 2.000 kg/heure,
- un set de filtration de classe moyenne avec changement automatique,
- une filière à joncs,
- un granulateur RIETER®,
- un séchoir col de cygne,
- un silo de stockage des granulés.

Etape F :

Le film polyester et/ou polyoléfine est obtenu par un procédé de fusion/extrusion où sont ajoutés, dans une extrudeuse, des granules de polymère (polyester, de préférence PET, et/ou polyoléfine) et des granules polymère/charge lamellaire obtenus en C, D et E. D'autres additifs et/ou polymères chargés ou non peuvent faire partie de la composition du mélange.

L'ensemble des granules est extrudé à l'état fondu à travers une filière (de préférence une filière à fente) sous forme d'un film épais amorphe.

La bonne répartition des particules résulte en particulier d'une bonne homogénéisation de la masse extrudée en fusion. Cette homogénéisation peut par exemple être optimisée par l'installation sur la ligne de filmature, d'au moins un filtre polymère de structure, de maillage et de surface de filtration adaptés.

Etape G :

L'étape G consiste à refroidir le film épais obtenu à l'étape F, par exemple à 20°C, et à le plaquer, par tout moyen connu et approprié, tel que le placage électrostatique dans le cas du polyester et le placage à lame d'air dans le cas de polyoléfines, sur un tambour de refroidissement, de manière à former un film amorphe.

Etapes H et 1 :

Le film obtenu après l'étape F ou G est ensuite avantageusement soumis (étape H) à un étirage bi-dimensionnel qui peut être d'abord longitudinal, par exemple MD (taux EL $\geq$ 3,0) suivi par un étirage transversal (taux ET $\geq$ 3,5). Le taux d'étirage planaire (défini comme le produit du taux d'étirage longitudinal et du taux d'étirage transversal, quel que soit l'ordre de ces étirages) est par exemple compris entre 1 et 20, habituellement supérieur à 12 pour le polyester. Pour les polyoléfines, le taux d'étirage planaire est beaucoup plus important, typiquement supérieur à 40 avec un taux d'étirage longitudinal EL $\geq$ 4,5 et un taux d'étirage transversal ET $\leq$ 10.

Les séquences d'étirage peuvent être différentes en fonction des machines utilisées sans influence sur les propriétés obtenues grâce à l'invention. Par exemple, on peut utilement utiliser des machines dites à séquence inverse ou des machines multi-étapes ("multistep"), des machines à séquences alternées ou des machines d'étirages simultanés, etc.

Pour le polyester, la température d'étirage est e.g. comprise entre la température de transition vitreuse Tg et une température au maximum égale à Tg + 60°C en direction longitudinale de même qu'en direction transversale. L'étirage longitudinal est effectué par exemple de 3 à 6 fois et l'étirage transversal par exemple de 3 à 5 fois. A titre d'exemple, pour le PET, la thermofixation (I) est effectuée entre 180 et 250°C (e.g. 240°C) pendant 1 à 60 secondes par exemple et ensuite à une température inférieure afin de stabiliser le film.

Variantes du procédé

Selon une variante, les particules métalliques sont incorporées au polymère au moins en partie sous forme libre, c'est-à-dire non incluses dans une matrice polymère provenant de l'utilisation (recyclage de chutes) de polymère métallisé.

Selon une autre variante, le film selon l'invention peut être de structure simple ou coextrudée $\alpha\beta$, $\alpha\beta\alpha$ ou encore $\alpha\beta\chi$ voire de structure plus complexe de type multicouches (les symboles $\alpha$, $\beta$ et $\chi$ correspondant à des couches de nature et/ou de composition différente).

Selon encore une autre variante, le film selon l'invention peut être aisément laminé par collage thermique et/ou à l'aide d'adhésif à un très grand nombre d'autres substrats, dont notamment les feuilles métalliques, par exemple en acier, les plaques ou les feuilles de verre ou d'autres polymères analogues au verre ou carton et autres matériaux.

Les applications du film selon l'invention

L'une des utilisations possibles du film selon l'invention est relative au traitement thermique de produits, ce traitement étant avantageusement sélectionné dans le groupe de traitements comprenant :

- la stérilisation,
- la pasteurisation,
- la cuisson ou réchauffage d'aliments au four à micro-ondes,
- le réchauffage ou la cuisson de produits alimentaires à la vapeur, etc.

Ces utilisations thermiques concernent plus spécialement les films de classe 1 (cf. ci-dessus) dans lesquels la quantité de broyat (Qb en % en poids) est supérieure à 20.

La densité optique des films de classe 1 se situe par exemple entre 0,1 et 0,5. Cela permet la cuisson améliorée et accélérée au four à micro-ondes de produits alimentaires emballés à l'aide de ce film chargé en particules lamellaires et doté de propriétés intéressantes de transfert thermique et de filtrage partiel des ondes électromagnétiques. Il s'agit de l'application couramment dénommée "film susceptor" ou "film suscepteur". Les produits alimentaires concernés sont notamment le pop-corn, les pizzas, les viandes (e.g. volailles). Il est possible de cuire ces produits en obtenant le doré correspondant à la cuisson traditionnelle. Le réchauffage est bien entendu lui aussi optimisé. Ces aliments ainsi cuits ou réchauffés aux micro-ondes peuvent être des aliments congelés ou non. Ces films permettent de réduire le temps de cuisson habituel par exemple d'un facteur supérieur à 10 tout en gardant les caractéristiques gustatives obtenues avec un four traditionnel.

Ces films sont également utilisables pour le traitement thermique de produits divers, en particulier de produits alimentaires, car ils sont extrêmement résistants aux températures élevées (à titre d'exemple, supérieures à 120°C). Les traitements thermiques visés sont entre autres : la stérilisation, la pasteurisation.

Une autre utilisation du film selon l'invention est l'emballage, de préférence d'aliments. Ce film d'emballage, notamment agro-alimentaire, forme en effet une barrière opaque à la lumière et aux gaz, ce qui contribue à la bonne conservation des aliments. Les films selon l'invention présentent des propriétés de conservation agro-alimentaire car métallisés ils constituent une barrière opaque à la lumière (UV) et aux gaz (vapeur d'eau, oxygène, etc.) et évitent ainsi une oxydation des produits alimentaires.

Dans cette utilisation particulière, le film selon l'invention est de préférence un film de classe 2, avec Qb = 2 à 20% (en % en poids). Les propriétés d'un tel film sont semblables à celles d'un film comprenant une couche du même polymère et un revêtement métallique ou à base d'oxyde(s) métallique(s), à savoir par exemple un film polyester PET métallisé aluminium.

L'utilisation du film selon l'invention dans l'emballage amène des gains significatifs au regard du coût de revient par rapport à un film (e.g. PET) métallisé standard. Les films à base de polypropylène bi-étirés sont particulièrement utilisés dans le domaine de l'emballage de produits alimentaires tels que les snacks, les biscuits, les barres chocolatées car ils ont de bonnes propriétés de scellage, de protection par effet barrière et de déchirabilité.

Encore une autre utilisation du film selon l'invention est la décoration et/ou la protection de supports divers. Ces derniers peuvent être entre autres des tôles métalliques, des panneaux de bois ou tous matériaux.

Une forme de réalisation du film selon l'invention dans laquelle il est métallisé sur l'une de ses faces, peut être avantageuse dans le domaine de la décoration. En effet dans ce cas, l'une des faces du film est brillante, l'autre est matte et donne un aspect acier brossé (différences de brillance d'une face à l'autre).

Encore une autre utilisation du film selon l'invention est la protection anti-feu de supports divers. Dans certaines réalisations, le film peut rendre les supports auto extinguibles.

Selon une modalité avantageuse de l'invention, le film considéré est imprimable. Grâce à la présence d'une quantité Qb de broyat (en % en poids) comprise entre 70 et 90, de préférence de l'ordre de 80, la tension de surface de ce film augmente. Dans le cas du polyester elle est supérieure ou égale à 48 mN/m, de préférence comprise entre 48 et 60 mN/m, et, plus préférentiellement encore d'environ 50 mN/m (par exemple valeur typique de 54 mN/m). Il est à noter que ce phénomène étant une propriété de surface, il peut être obtenu par coextrusion, procédé multicouches, extrusion couchage, couchage par fusion ("hot melt"), etc.

Le fait que le film selon la présente invention soit "scellable" et/ou "pelable" (c'est-à-dire décollable d'un support en matériaux divers, par exemple plastique ou métal), et déchirable, est exploitable dans de nombreuses utilisations.

Le film selon la présente invention peut être scellable sur lui-même et/ou sur d'autres matériaux plastiques tels que APET, CPET, PVC, PS, etc., métalliques et/ou vitreux.

Il est à noter que plus le Qb du film selon l'invention est élevé, plus le film se déchire facilement sans "dents de scie".

Les films selon la présente invention peuvent être utilisés pour des applications d'échauffement par courants de Foucault. Ces courants de Foucault sont des courants induits qui prennent naissance par exemple dans un conducteur en mouvement dans un champ magnétique constant ou encore dans un solide métallique immobile soumis à une variation de champ magnétique. Ils sont une conséquence de l'induction magnétique.

Les courants de Foucault s'établissant dans la pièce métallique immobile provoquent ainsi un échauffement par effet joule.

Les exemples de fabrication et d'évaluation du film selon l'invention permettront de mieux comprendre cette dernière et d'appréhender tous ses avantages.

Description_des tableaux

- Tableau 1 : Caractérisation des différents lots de PET métallisé re-granulé.
- Tableau 2 : Test de cuisson au four micro-ondes en présence d'un film contenant du broyat.

Description des figures

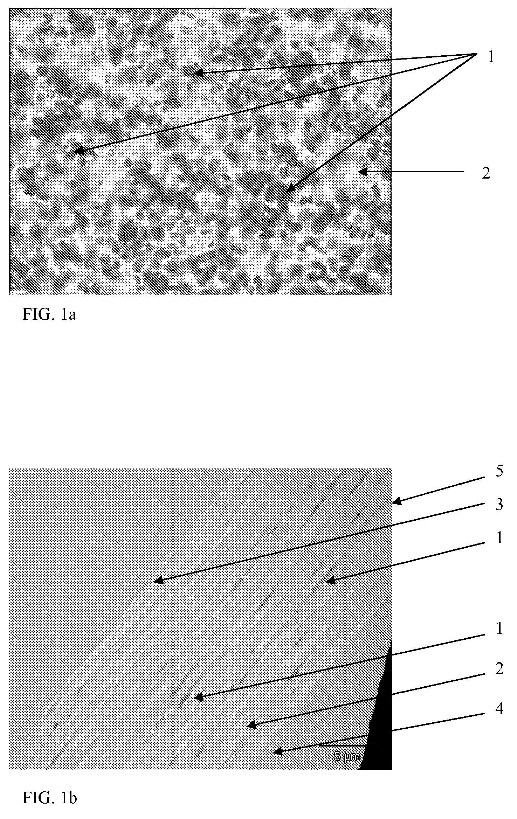

- Les figures *1a* à le représentent quatre photographies du film selon l'invention

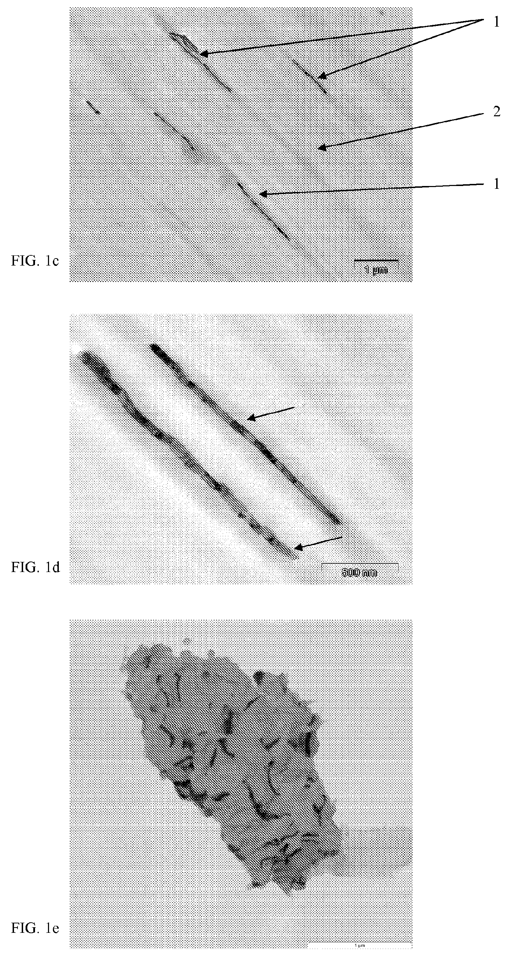

    → Fig. *1a* : vue au microscope optique à transmission (grossissement X1100) dans le plan XY ;
    → Fig. *1b, 1c, 1d :* coupes transversales (plan Z), vues au microscope électronique à transmission (grossissement X5600, X24000, X84000 respectivement) ;
    → Fig. *1e* : vue au microscope électronique à transmission dans le plan XY d'une particule métallique après dissolution du polyester.

- La figure 2 est un graphique représentant le taux d'aluminium (Al), en % en poids, mesuré par le taux de cendres et le taux d'oxyde d'aluminium ($Al_2O_3$), en % en poids, mesuré par fluorescence X en fonction de la concentration en broyat (Qb, en % en poids) contenu dans les films.

- La figure *3* est un graphique représentant la mesure de la densité optique en fonction de la concentration de broyat (Qb, en % en poids) contenu dans les films.
- La figure *4* est un graphique représentant la mesure de haze en fonction de la concentration en broyat (Qb, en % en poids) contenu dans les films.
- Les figures *5a* et *5b* sont des graphiques représentant respectivement l'indice de blanc et le L* en fonction de la concentration de broyat (Qb, en % en poids) contenu dans les films.
- La figure *6* est un graphique représentant la mesure de la brillance en fonction de la concentration de broyat (Qb, en % en poids) contenu dans les films.
- La figure *7* est un graphique représentant la résistivité (MOhms.m) fondue en fonction de la concentration en broyat (Qb, en % en poids) contenu dans les films.

**Exemples**

I- Procédé de réalisation de films PET chargés en particules lamellaires d'aluminium

1. Procédé de préparation des broyats à base de polyester métallisé

Après avoir été broyés dans un broyeur ALPINE® de HOSOKAWA® (étape A), des films PET métallisés avec aluminium (gamme CLARYL® de TORAY®) sont transformés sur une machine de type VACUREMA® de EREMA®.
Dans un second temps, les films réduits en paillettes sont compactés, agglomérés dans un compacteur à 172°C (étape B). Ensuite, on réalise une fusion des agglomérats à 280°C (étape C). La masse en fusion est ensuite refroidie et solidifiée dans un flux d'eau à la température ambiante (étape D) à l'aide d'un équipement connexe de la machine VACUREMA®, dont la marque est RIETER®. Ladite masse refroidie est coupée à la température ambiante en granulés par le dispositif aval de l'équipement RIETER® (étape E).
Les caractéristiques et les conditions opératoires du broyage, de l'agglomération et de l'extrusion (étapes A-E) sont les suivantes :

Caractéristiques et conditions opératoires du compacteur

Puissance moteur : 71 KW
Vitesse compactage : 145 tours/minute
Charge machine : 61%
Niveau de vide : 36 mbar
Température des granules dans le compacteur : 172°C
Température de la zone au niveau de la fenêtre de remplissage de l'extrudeuse : 196°C

Condition d'extrusion sous vide

Débit : 946 kg/heure
Vitesse vis : 64 tours/minute
Charge machine : 55%
Niveau de vide : 20 mbar

La filtration est assurée par 4 filtres métalliques de 35 microns de "cut-off'. On ne constate pas de colmatage de filtres ni de dépôts au démontage.
Les broyats qui vont ensuite servir à réaliser des films comme indiqué ci-dessus sont analysés par fluorescence X selon une méthode interne utilisée habituellement pour la caractérisation du PET. Les mesures prouvent la présence de l'aluminium dans la matière re-granulée (voir Tableau 1). L'indice de viscosité est mesuré selon ISO 1628-5 et les résultats sont donnés dans le Tableau 1.

*Tableau 1 : Caractérisation des différents lots de PET métallisé re-granulé.*

| Granulés PET Aluminium | VI | Fluorescence X (ppm) | | | | | | |
|---|---|---|---|---|---|---|---|---|
| Essais | (dl/g) | Ca | P | Sb | Mg | SiO2 | Ti | Al |
| 1 | 0,559 | 41 | 46 | 165 | 53 | 727 | 1 | 8066 |
| 2 | 0,558 | 28 | 48 | 167 | 50 | 706 | 1 | 7016 |
| 3 | 0,562 | 32 | 48 | 165 | 44 | 723 | 1 | 7833 |
| 4 | 0,57 | 42 | 49 | 167 | 37 | 745 | 1 | 8024 |
| 5 | 0,569 | 42 | 47 | 163 | 48 | 754 | 1 | 8040 |

2. Préparation des films PET contenant lesdits broyats

Par la suite les granulés ainsi obtenus, ci-dessus appelés broyats, sont extrudés en mélange avec d'autres polymères dans la machine de fabrication de film (étape F) afin d'élaborer de nouveaux films en polyester chargés en particules lamellaires d'aluminium avec des pourcentages de broyats Qb inférieurs ou égaux à 100 (en % en poids).

Les différents mélanges à base de PET et broyat sont rendus homogènes à l'état granulé puis sont extrudés à l'état fondu à travers une filière à fente sous forme d'un film épais que l'on refroidit par plaquage électrostatique sur un tambour de refroidissement à 20°C (étape G), de manière à former un film amorphe.

3. Préparation des films PET bi-orientés contenant lesdits broyats

Des films PET bi-étirés contenant du broyat sont réalisés selon les modalités de préparation du film habituellement utilisées dans le domaine de l'emballage. Pour des raisons de machinabilité, des charges inorganiques sont incorporées à une concentration habituellement inférieure à 0,1%. Dans ces exemples, les pourcentages de broyat Qb incorporé varient dans la masse des films comprenant une couche extrudée. Dans ces exemples, on utilise un polyéthylène téréphtalate PET ayant un indice de viscosité de 0,64 dl/g (mesuré selon la norme ISO 1628-5 et contenant 0,1% en poids d'une charge constituée par des particules de silice ayant un diamètre médian en volume $d_{50}$ d'environ 3,5 $\mu$m. Dans ces exemples, le broyat utilisé a un indice de viscosité (mesuré selon la même norme mentionnée) de 0,56 dl/g. Le broyat est dans ce cas issu d'un procédé de recyclage des films de type CLARYL® comportant un film PET revêtu sur l'une de ses faces d'une pellicule fine d'aluminium obtenue par évaporation sous vide.

Les différents mélanges à base de PET et broyat sont rendus homogènes à l'état granulé puis sont extrudés à l'état fondu à travers une filière à fente sous forme d'un film épais que l'on refroidit par plaquage électrostatique sur un tambour de refroidissement à 20°C (étape G), de manière à former un film amorphe. Le film ainsi obtenu est en suite soumis à un étirage longitudinal MD (taux EL 3,0) suivi par un étirage transversal (taux ET 3,5) (étape H). Le taux d'étirage planaire (défini comme le produit du taux d'étirage longitudinal et du taux d'étirage transversal, quel que soit l'ordre de ces étirages) est de 10,5. Le film bi-étiré (ayant 12 $\mu$m d'épaisseur dans tous les exemples) est ensuite soumis à une thermofixation à une température supérieure à 215°C (étape I). Enfin les films sont soumis à différentes évaluations.

4. Forme, répartition et dimensions des particules des films bi-orientés chargés-Observations au microscope.

Comme illustré sur les figures la, 1b, 1c, 1d, 1e, les particules d'aluminium, désignées par la référence 1, ont une forme de lamelles, majoritairement grossièrement rectangulaires (cf. Figure 1e), incluses dans la matrice PET 2 et organisées en plusieurs feuillets parallèles aux faces 3 et 4 du film 5 (cf. Figure 1b).

La répartition des particules dans les différents films ainsi que leur taille sont estimées par des mesures optiques à l'aide d'un microscope optique de type NIKON®. Les particules d'aluminium sont statistiquement distribuées dans le plan du film PET préparé par adjonction de broyat issu de films polymères métallisés recyclés. Le facteur de forme (F) défini comme le rapport entre la plus grande dimension dans le plan de la particule (L) sur son épaisseur (e) est dans cet exemple d'environ 100 (voir Figure 1d : F=1250 nm/12,5 nm).

5. Dosage de la charge d'aluminium dans les films

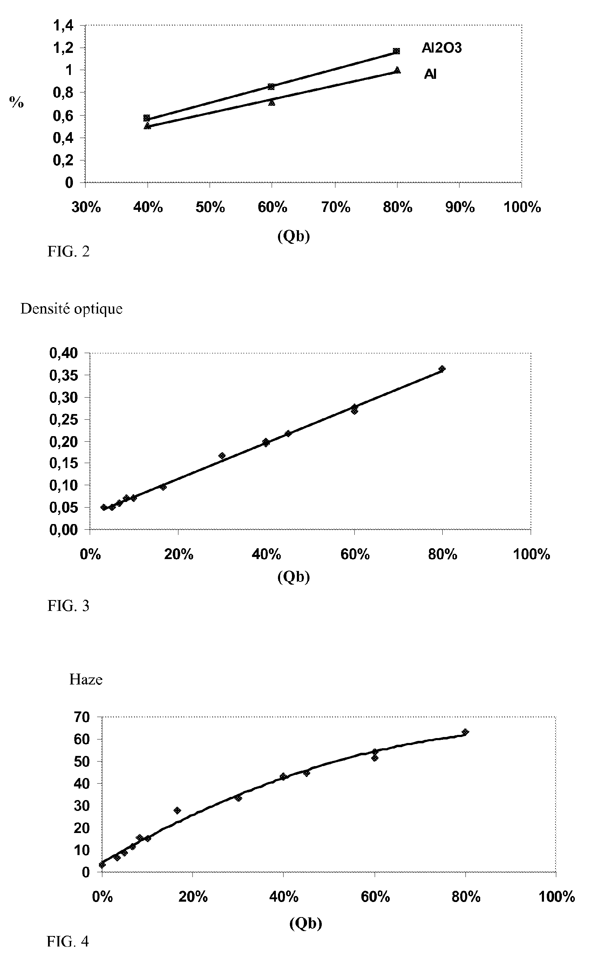

La présence de l'aluminium est quantifiée par des mesures de fluorescence X. Le taux d'oxyde de l'aluminium, par exemple $Al_2O_3$, est ensuite calculé, les valeurs obtenues étant en accord avec les prévisions théoriques (voir Figure 2).

La présence de l'aluminium est mise en évidence par des mesures dites de taux de cendres. Le taux de cendres est mesuré après combustion complète pour différents films contenant du broyat. Pour un film qui ne contient que du PET chargé en particules de silice, la valeur de 0,11% correspond à la quantité de silice utilisée. Pour un film qui contient 80% de broyat le taux total de cendres (aluminium et silice) est de 1,11%, conduisant à un pourcentage d'aluminium de 1% (voir Figure 2).

6. Propriétés optiques spécifiques des films PET bi-orientés chargés

Les propriétés optiques des films PET contenant du broyat dépendent fortement de la concentration du produit incorporée. Un aspect gris satiné est obtenu à des concentrations élevées ($\geq$ 60% pour l'exemple) tandis qu'un aspect identique à un film PET standard est obtenu pour une concentration inférieure à un seuil connu.

6.1. Densité optique

La densité optique DO est mesurée à l'aide d'un densitomètre de type MACBETH$^®$ selon ASTM D-1003, appareil permettant de mesurer l'intensité lumineuse (source orthochromatique domaine de longueur d'onde de 350 à 650 nm) transmise à travers un film. Pour un film bi-étiré avec une épaisseur d'environ 12 $\mu$m la densité optique augmente de 0,04 pour 0% de broyat à 0,45 pour 100% de broyat dans la masse du film (voir Figure 3).

6.2. Haze

Le haze est mesuré à l'aide d'un hazemètre de type BYK GARDNER$^®$ selon ASTM D-1003. Le haze est déterminé par les charges au coeur du film, par le vide créé autour des charges lors de l'étirage, par la rugosité de surface et par le broyat incorporé. A titre d'exemple, un film bi-étiré qui contient 80% de broyat avec une épaisseur de 12 $\mu$m, présente un haze très élevé ($\geq$ 60%, voir Figure 4) par rapport à un film PET sans rajout de broyat (haze ~3%).

6.3. Colorimétrie

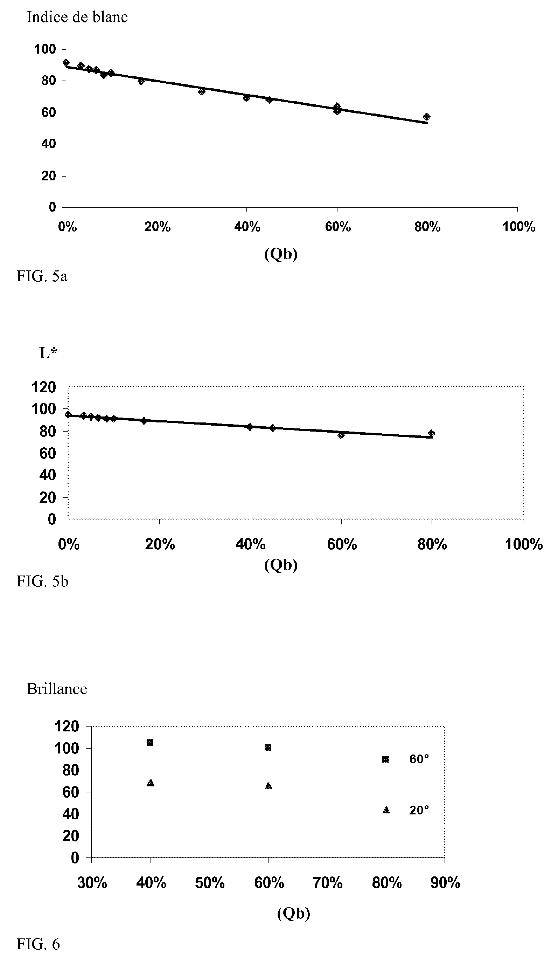

Les mesures colorimétriques de type L*, a*, b*, et d'indice de blanc WI ASTM E-313 sont effectuées à l'aide d'un spectrophotomètre de type KONICA-MINOLTA$^®$. En augmentant la quantité du broyat incorporée dans le film bi-étiré, la luminosité ainsi que l'indice de blanc diminuent, les films deviennent de plus en plus gris (voir Figures 5a et 5b).

6.4. Brillance

Les mesures de brillance sont réalisées à l'aide d'un réflectomètre de type GARDNER MIRROR-TRI-GLOSS$^®$ selon ASTM D-2457. La surface de l'échantillon est soumise à un faisceau de rayons lumineux sous un angle défini (ici 20° et 60°) et la lumière réfléchie est mesurée photo-électriquement. Un film PET avec 60% de broyat est sensiblement moins brillant qu'un film avec 40% de broyat (voir Figure 6).

7. Propriétés de surface spécifiques des films PET bi-orientés chargés

7.1. Tension de surface / mouillabilité

La tension de surface est mesurée à l'aide des encres calibrées selon la méthode test ASTM D-2578. Un film qui contient 80% de broyat a une tension de surface de 54 mN/m, valeur supérieure à la tension de surface d'un PET standard (48 mN/m). Cela peut déterminer selon le cas une meilleure imprimabilité.

7.2. Coefficient de frottement / glissant

Le coefficient de frottement est mesuré à l'aide d'un appareil de type INSTRON$^®$ selon ASTM D-1894. L'adjonction de broyat améliore le glissant du film et par conséquence sa machinabilité.

8. Comportement électrique des films PET bi-orientés chargés

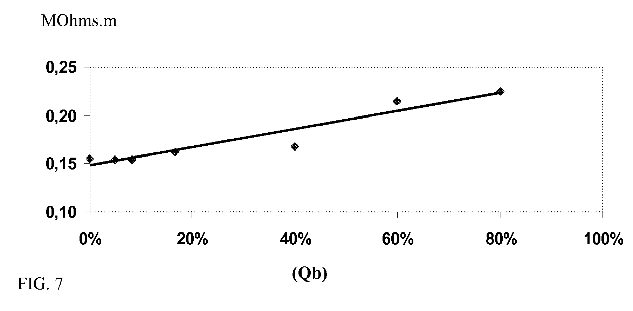

Les différents films considérés dans ces exemples ne sont pas antistatiques, la résistivité de surface mesurée selon ASTM D-257 à l'aide d'un résistivimètre de type KEITHLEY$^®$ (électromètre) étant supérieure à $10^{15}$ Ohms/square.
La résistivité fondue mesurée selon la méthode ci-dessous décrite, augmente si le pourcentage de broyat augmente (voir Figure 7).

Mesure de la résistivité des à l'état fondu

Le domaine d'application de cette mesure concerne uniquement les polymères fondus. Le principe est la mesure de l'intensité du courant traversant une lame définie par une dizaine de granulés de polymère à l'état fondu, après étuvage sous vide, en les soumettant à une tension électrique définie.

L'appareillage suit les équations suivantes de la physique :

$$U = RI$$

$$R = rho * L/S$$

Donc,

$$rho = R*S/L = (U/I)*(S/L)$$

Avec,

  Q = section de la lame polymère
  L = longueur de la lame polymère
  E = épaisseur du di-électrique
  S = surface de polymère analysé
  U = Tension électrique (V)
  I = Intensité du courant (A)

De plus, S = Q*E
Et, on a donc, rho = K/I
Avec K = U*S/L

La procédure utilisée pour la mesure est la suivante :

- sécher 100g de granulés de polymère en étuve sous vide, 2 heures à 140°C,
- préparer l'unité chauffante de l'électromètre 1 heure avant, à 278°C,
- laisser les 10 granulés de polymère pris dans les 100 grammes secs, au maximum 5 minutes dans la cellule de mesure, mais attendre suffisamment pour que la fusion soit effective,
- appliquer la tension électrique et mesurer le courant.

Du fait de la conception de l'électromètre, on trouve :

Rho = 0,142/Intensité relevée en MOhms.mètres

9. Comportement des films PET bi-orientés chargés par rapport à l'adhésion d'une couche métallique mince

9.1. Un film PET contenant 60% de broyat dans sa masse est métallisé par évaporation sous vide (épaisseur de la couche métallique ~20 nm). La force d'adhésion du métal (ici aluminium) sur film polyester est mesurée selon les recommandations AIMCAL TP-105-92 ("*Metallizing Technical Reference*" éditée par l'Association of Industrial Metallizers, Coaters and Laminators). La force d'adhésion entre la couche métallique et le film PET est de 0,2 N/38 mm. La force d'adhésion entre un même type de couche métallique et un film PET standard est d'environ 0,05 N/38 mm. La force d'adhésion entre le même type de couche métallique et un film PET traité par plasma est d'environ 0,15 N/38 mm.

9.2. Un film PET contenant 60% de broyat dans une couche coextrudée est métallisé par évaporation sous vide (épaisseur de la couche métallique ~20 nm). La force d'adhésion du métal (ici aluminium) sur film polyester est mesurée selon la méthode de test sus-décrite. La force d'adhésion entre la couche métallique et le film PET est de 0,2 N/38 mm. La force d'adhésion entre le même type de couche métallique et un film PET traité par plasma est d'environ 0,15 N/38 mm. La force d'adhésion entre même couche métallique et un film PET standard est d'environ 0,05 N/38 mm.

10. Comportement des films PET bi-orientés chargés relatif au traitement de surface

10.1. La surface d'un film contenant 60% de broyat est traitée par une décharge électrique de type corona. Les conditions du traitement sont : pression atmosphérique (1 bar), gaz du traitement air ambiant, la distance film - électrode ~1 mm, dosage 15 Wmin/m$^2$. Par la suite la tension de surface du film est mesurée à l'aide des encres test calibrées selon la méthode test ASTM D-2578. La tension de surface du film augmente de 52 mN/m à 58 mN/m.

10.2. La surface d'un film contenant 60% de broyat est traitée par un plasma de type magnétron sous vide. La pression est de $5 \times 10^{-2}$ mbar, le gaz du traitement est un mélange d'Ar et d'$O_2$, la distance film - électrode est d'environ 20 cm et la vitesse de défilement du film est de 600 m/min. Par la suite l'énergie de surface du film est mesurée à l'aide des encres test calibrées selon ASTM D-2578. L'énergie de surface du film augmente de 52 mN/m à plus de 60 mN/m.

10.3. La surface d'un film contenant 60% de broyat est traitée par un plasma de type décharge à barrière diélectrique. La pression est la pression atmosphérique (1 bar), le gaz du traitement est un mélange à base d'azote, la distance film - électrode est d'environ 1 mm, le dosage est de 20 Wmin/m$^2$. Par la suite l'énergie de surface du film est mesurée à l'aide des encres test calibrées selon ASTM D-2578. L'énergie de surface du film augmente de 52 mN/m à plus de 60 mN/m, mettant en évidence une modification de la nature physico-chimique de la surface du film.

11. Propriétés mécaniques particulières (facilitation de la propagation linéique de la déchirure) des films PET bi-orientés chargés

Les mesures de résistance à la rupture MD/TD (TD correspondant à la direction transverse ("transverse direction") et MD correspondant au sens machine ("machine direction")) et d'allongement à la rupture MD/TD sont faites selon ASTM D-882 à l'aide d'un appareil de type INSTRON® et montrent que les propriétés mécaniques dans les 2 directions sont plus faibles que dans le cas d'un PET sans adjonction de broyat. Les mesures de résistance à la perforation sont en accord. Les mesures de déchirure orientée effectuées à l'aide d'un appareil de type ELMENDORF® permettent de mettre en évidence le fait que l'incorporation de broyat (particules) facilite la propagation linéique de la déchirure.

12. Propriétés "barrière" à l'oxygène et à la vapeur d'eau des films PET bi-orientés chargés

Les valeurs de perméabilité à l'oxygène mesurées selon ASTM D-3985 et à la vapeur d'eau mesurées selon ASTM F-1249 ne sont pas du tout dégradées par rapport à un PET standard pour la même épaisseur.

13. Tenue au feu des films PET bi-orientés chargés

Des films PET bi-orientés contenant lesdits broyats et ayant une épaisseur de 23 $\mu$m sont évalués par rapport à leur tenue au feu selon la norme UL94. Un film chargé en broyat (Qb) à 80% en poids ne s'enflamme pas et ne goutte pas.

14. Test de cuisson au four micro-ondes en présence d'un film chargé

Des tests de cuisson de différents produits alimentaires sont réalisés pour évaluer si les emballages qui incluent des films contenant lesdits broyats possèdent les propriétés nécessaires aux applications de type "susceptor" ou "suscepteur", fortement demandées dans le domaine des emballages actifs. Le matériel utilisé est un four micro-ondes de type DAEWOO® qui a une puissance restituée d'environ 900 W et fonctionne à la fréquence industrielle standard de 2.45 GHz. Le temps de cuisson est adapté en fonction du type d'aliment et d'emballage. Par exemple, un film PET contenant 80% de broyat (Qb) s'avère particulièrement adapté pour la cuisson de la volaille en obtenant un aspect doré correspondant à la cuisson traditionnelle. Il est notable aussi que le comportement des films chargés en particules métalliques dans la masse est nettement amélioré lors d'un temps d'exposition plus long aux micro-ondes par rapport au comportement des films métallisés en surface dont la densité optique est comparable (films de type "suscepteur" habituellement utilisés).

Aspect et texture

*Tableau 2: Test de cuisson au four micro-ondes en présence d'un film contenant du broyat.*

|  | Boite | | Sachet | |
|---|---|---|---|---|
| Référence film | Hamburger | Nuggets | Poulet | Nuggets |
| Témoin PET LUMIRROR® | □ | □ | X | X |
| PET avec 80% de broyat (Qb) | □ | □ | □ | X |
| X : mauvais □ : correct O : bon | | | | |

II- Exemples de réalisation des films en polypropylène chargés en particules lamellaires d'aluminium.

1. Préparation des broyats à base de polypropylène métallisé

Après avoir été broyés dans un broyeur ALPINE® de HOSOKAWA® (étape A), des films PET métallisés avec aluminium (gamme CLARYL® de TORAY®) sont transformés sur une machine de type VACUREMA® de EREMA®.

Dans un second temps, les films réduits en paillettes sont compactés, agglomérés dans un compacteur à 133°C (étape B). Ensuite, on réalise une fusion des agglomérats à 190°C (étape C). La masse en fusion est ensuite refroidie et solidifiée dans un flux d'eau à la température ambiante (étape D) à l'aide d'un équipement connexe de la machine VACUREMA®, dont la marque est RIETER®. Ladite masse refroidie est coupée à la température ambiante en granulés par le dispositif aval de l'équipement RIETER® (étape E).

Les caractéristiques et les conditions opératoires du broyage, de l'agglomération et de l'extrusion (étapes A-E) sont les suivantes :

Caractéristiques et conditions opératoires du compacteur

Puissance moteur : 60 KW
Vitesse compactage : 145 tours/minute
Charge machine : 51 %
Niveau de vide : 36 mbar
Température des granules dans le compacteur : 133°C
Température de la zone au niveau de la fenêtre de remplissage de l'extrudeuse: 155°C

Condition d'extrusion sous vide

Débit : 946 kg/heure
Vitesse vis : 64 tours/minute
Charge machine : 48%
Niveau de vide : 20 mbar

La filtration est assurée par 4 filtres métalliques de 35 microns de "cut-off". On ne constate pas de colmatage de filtres ni de dépôts au démontage.

2. Préparation des films de polypropylène contenant lesdits broyats

Par la suite les granulés ainsi obtenus ci-dessus, appelés broyats, sont extrudés en mélange avec d'autres polymères dans la machine de fabrication de film (étape F) afin d'élaborer des nouveaux films en polypropylène chargés en particules lamellaires d'aluminium avec des pourcentages de broyats Qb inférieur ou égal à 100.

Les différents mélanges à base de polypropylène et broyat sont rendus homogènes à l'état granulé puis sont extrudés à l'état fondu à travers une filière à fente sous forme d'un film épais que l'on refroidi sur une succession de trois tambours refroidis à une température d'environ 20°C (étape G) de manière à former un film amorphe.

3. Préparation des films polypropylène bi-orientés contenant lesdits broyats

Le film amorphe ainsi obtenu est en suite soumis à un étirage longitudinal MD (taux EL 4,0) suivi par un étirage transversal (taux ET 4,5) (étape H). Le taux d'étirage planaire (défini comme le produit du taux d'étirage longitudinal et du taux d'étirage transversal, quel que soit l'ordre de ces étirages) est de 18. Le film bi-étiré ayant 18 $\mu$m d'épaisseur est ensuite soumis à une thermofixation à une température supérieure à 130°C (étape I).

## Revendications

**1.** Procédé de production d'une matière première destinée à la fabrication d'un film polyester et/ou polyoléfine, ladite matière première contenant des particules lamellaires à base d'au moins un métal et/ou d'au moins un oxyde métallique, **caractérisé en ce que**

- les particules lamellaires répondent à un facteur de forme F défini comme le rapport entre la plus grande dimension L dans le plan de la particule et son épaisseur e tel que : $10 \leq F \leq 1000$ ; $0,01\mu m \leq L \leq 500 \ \mu m$; et $0,001 \ \mu m \leq e \leq 1 \ \mu m$, la dimension L et l'épaisseur e étant déterminées par microscopie électronique à transmission,
- et **en ce qu'**il comprend les étapes suivantes:

A. le broyage d'au moins un film revêtu comprenant au moins un film polyester et/ou polyoléfine et au moins une pellicule à base d'au moins un métal et/ou d'au moins un oxyde métallique, de manière à obtenir des paillettes,
B. éventuellement le compactage des paillettes issues du broyage en agglomérats,
C. la fusion des paillettes ou des agglomérats issus du compactage,
D. le refroidissement/solidification de cette masse en fusion,
E. la transformation de la masse solidifiée en éléments discrets constituant la matière première, de préférence en granulés.

**2.** Procédé selon la revendication 1, **caractérisé en ce que** le métal et/ou l'oxyde métallique des particules lamellaires est choisi dans le groupe comprenant : aluminium, cuivre, nickel, or, argent, et leurs alliages, les oxydes des métaux du groupe précité, et leurs mélanges.

**3.** Procédé selon la revendication 1 ou 2, **caractérisé en ce que** le métal et/ou l'oxyde métallique des particules lamellaires est choisi parmi l'aluminium ou ses oxydes.

**4.** Procédé selon la revendication 1, 2 ou 3, **caractérisé en ce que** l'étape C est suivie d'une filtration visant à éliminer les particules de métal et/ou d'au moins un oxyde métallique, dont la plus grande dimension (L) est supérieure ou égale à 10$\mu$m, de préférence supérieure ou égale à 5 $\mu$m, et, plus préférentiellement encore supérieure ou égale à 3 $\mu$m.

**5.** Procédé de fabrication d'un film polyester et/ou polyoléfine qui contient des particules lamellaires à base d'au moins un métal et/ou d'au moins un oxyde métallique, **caractérisé en ce qu'**il comprend les étapes suivantes :

F. la fabrication du film par extrusion/fusion d'un mélange contenant une quantité Qb (en % en poids) de ces éléments discrets, de préférence de ces granulés, issus de l'étape E du procédé selon l'une des revendications 1 à 4,
G. le refroidissement du film issu de l'étape F, de préférence à l'aide d'un système de placage, et, plus préférentiellement encore, un système de placage électrostatique ou à lame d'air sur un tambour de refroidissement ;

cette étape F et cette étape G étant mises en oeuvre à la suite de l'étape E (mode continu) selon le procédé de l'une des revendications 1 à 4 ou après stockage des éléments discrets, de préférence des granulés, issus de l'étape E du procédé de l'une des revendications 1 à 4 (mode discontinu).

**6.** Procédé selon la revendication 5, **caractérisé en ce qu'**il comprend en outre les étapes suivantes :

H. l'étirage longitudinal et transversal du film issu de l'étape F ou G,

I. la thermofixation du film issu de l'étape H à une température supérieure ou égale à 150°C, de préférence encore comprise entre 180 et 250°C et, plus préférentiellement encore à 240°C, lorsque le film est constitué de polyester, et à une température est supérieure ou égale à 120°C, de préférence encore comprise entre 130 et 200°C et, plus préférentiellement encore à 150°C, lorsque le film est constitué de polyoléfine.

**7.** Procédé selon l'une des revendications 5 à 6, **caractérisé en ce que** la quantité Qb en % en poids est telle que :

$$20 \leq Qb \leq 100,$$

de préférence $25 \leq Qb \leq 99$,
et plus préférentiellement encore $30 \leq Qb \leq 95$.

**8.** Procédé selon l'une des revendications 5 à 6, **caractérisé en ce que** la quantité Qb en % en poids est telle que :

$$10^{-1} \leq Qb \leq 20,$$

de préférence $1 \leq Qb \leq 20$,
et plus préférentiellement encore $2 \leq Qb \leq 20$.

**9.** Procédé selon l'une des revendications 5 à 8, **caractérisé en ce que** le film obtenu est bi-étiré isotropique ou bi-étiré tensilisé ou bi-étiré balance.

**10.** Procédé selon la revendication 9, **caractérisé en ce que** le film obtenu a une épaisseur (e) comprise entre 3 et 350 $\mu$m, de préférence entre 8 et 50 $\mu$m, et, plus préférentiellement encore entre 8 et 36 $\mu$m.

**11.** Procédé selon au moins l'une des revendications 9 à 10, **caractérisé en ce que** le film obtenu comprend au moins un revêtement sur au moins une de ses faces, ledit revêtement étant obtenu par coextrusion, enduction, extrusion couchage, traitement corona sous air ambiant ou gaz, évaporation sous vide, traitement plasma ou dépôt physico-chimique sous vide.

**Patentansprüche**

**1.** Produktionsverfahren eines Rohstoffs, der zur Herstellung einer Polyester- und/oder Polyolefinfolie bestimmt ist, wobei der Rohstoff lamellare Teilchen auf der Basis mindestens eines Metalls und/oder mindestens eines Metalloxids umfasst, **dadurch gekennzeichnet, dass**

- die lamellaren Teilchen einem Formfaktor F entsprechen, der als das Verhältnis zwischen dem größten Maß L in der Ebene des Teilchens und seiner Stärke e derart definiert ist, dass: $10 \leq F \leq 1000$; $0,01 \ \mu m \leq L \leq 500 \ \mu m$; und $0,001 \ \mu m \leq e \leq 1 \ \mu m$, wobei das Maß L und die Stärke e durch Transmissionselektronenmikroskopie bestimmt werden,
- und dass es die folgenden Schritte umfasst:

A. Zerkleinern mindestens einer beschichteten Folie, die mindestens eine Polyester- und/oder Polyolefinfolie und mindestens eine Haut auf der Basis mindestens eines Metalls und/oder mindestens eines Metalloxids umfasst, so dass man Pailletten erhält,
B. eventuell das Kompaktieren der Pailletten, die aus dem Zerkleinern in Agglomerate hervorgegangen sind,
C. das Schmelzen der Pailletten oder der Agglomerate, die aus dem Kompaktieren hervorgegangen sind,
D. das Abkühlen/Verfestigen dieser Schmelzmasse,
E. die Umwandlung der verfestigten Masse in getrennte Elemente, die den Rohstoff bilden, vorzugsweise in Granulatform.

**2.** Verfahren nach Anspruch 1, **dadurch gekennzeichnet, dass** das Metall und/oder Metalloxid der lamellaren Teilchen aus der Gruppe ausgewählt wird, die Folgendes umfasst: Aluminium, Kupfer, Nickel, Gold, Silber und ihre Legierungen, die Oxide der Metalle der genannten Gruppe und ihre Gemische.

3. Verfahren nach Anspruch 1 oder 2, **dadurch gekennzeichnet, dass** das Metall und/oder Metalloxid der lamellaren Teilchen aus Aluminium oder seinen Oxiden ausgewählt wird.

4. Verfahren nach Anspruch 1, 2 oder 3, **dadurch gekennzeichnet, dass** auf den Schritt C ein Filtern folgt, das darauf abzielt, die Metallteilchen und/oder mindestens ein Metalloxid zu eliminieren, deren/dessen größtes Maß (L) größer oder gleich ist als 10 $\mu$m, vorzugsweise größer oder gleich 5 $\mu$m und vorzugsweise größer oder gleich 3 $\mu$m.

5. Herstellungsverfahren einer Polyester- oder Polyolefinfolie, die lamellare Teilchen auf der Basis mindestens eines Metalls und/oder Metalloxids umfasst, **dadurch gekennzeichnet, dass** es die folgenden Schritte umfasst:

   F. die Herstellung der Folie durch Extrusion/Fusion eines Gemischs, das eine Menge Qb (in Gewichtsprozent) dieser getrennten Elemente enthält, vorzugsweise dieser Granulate, die aus dem Schritt E des Verfahrens nach einem der Ansprüche 1 bis 4 hervorgegangen sind,
   G. das Abkühlen der Folie, die aus dem Schritt F hervorgegangen ist, vorzugsweise mit Hilfe eines Plattierungsprozesses und, noch bevorzugter eines elektrostatischen Plattierungsprozesses oder mit Luftzunge auf einer Kühltrommel;

   wobei dieser Schritt F und dieser Schritt G im Anschluss an den Schritt E (kontinuierlicher Modus) gemäß dem Verfahren nach einem der Ansprüche 1 bis 4 oder nach dem Lagern der getrennten Elemente, vorzugsweise der Granulate, die aus dem Schritt E des Verfahrens eines der Ansprüche 1 bis 4 hervorgegangen sind (unterbrochener Modus), umgesetzt wird.

6. Verfahren nach Anspruch 5, **dadurch gekennzeichnet, dass** es außerdem die folgenden Schritte umfasst:

   H. Längs- und Querstrecken der Folie, die aus dem Schritt F oder G hervorgegangen ist,
   I. Wärmebefestigung der Folie, die aus dem Schritt H hervorgegangen ist, bei einer Temperatur größer oder gleich 150 °C, vorzugsweise zwischen 180 und 250 °C und am bevorzugtesten 240 °C, wenn die Folie aus Polyester besteht, und bei einer Temperatur größer oder gleich 120 °C, vorzugsweise zwischen 130 und 200 °C und noch bevorzugter 150 °C, wenn die Folie aus Polyolefin besteht.

7. Verfahren nach einem der Ansprüche 5 bis 6, **dadurch gekennzeichnet, dass** die Menge Qb in Gewichtsprozent derart ist, dass:

$$20 \leq Qb \leq 100,$$

   bevorzugt $25 \leq Qb \leq 99$,
   und noch bevorzugter $30 \leq Qb \leq 95$.

8. Verfahren nach einem der Ansprüche 5 bis 6, **dadurch gekennzeichnet, dass** die Menge Qb in Gewichtsprozent derart ist, dass:

$$10^{-1} \leq Qb \leq 20,$$

   bevorzugt $1 \leq Qb \leq 20$,
   und noch bevorzugter $2 \leq Qb \leq 20$.

9. Verfahren nach einem der Ansprüche 5 bis 8, **dadurch gekennzeichnet, dass** die erhaltene Folie isotrop biaxial gestreckt oder biaxial gespannt ("tensilised") oder biaxial ausgewogen ("balanced") wird.

10. Verfahren nach Anspruch 9, **dadurch gekennzeichnet, dass** die erhaltene Folie eine Stärke (e) zwischen 3 und 350 $\mu$m, vorzugsweise zwischen 8 und 50 $\mu$m und noch bevorzugter zwischen 8 und 36 $\mu$m hat.

11. Verfahren nach mindestens einem der Ansprüche 9 bis 10, **dadurch gekennzeichnet, dass** die erhaltene Folie mindestens eine Beschichtung auf mindestens einer ihrer Seiten umfasst, wobei die Beschichtung durch Coextrusion, Schlichten, Extrusionsbeschichten, Koronabehandlung unter Umgebungsluft oder Gas, Vakuumverdampfung, Plasmabehandlung oder physikalisch-chemische Vakuumablagerung erhalten wird.

**Claims**

1.  Method for producing a raw material intended for the manufacture of a polyester and/or polyolefin film, said raw material containing lamellar particles based on at least one metal and/or at least one metal oxide, **characterized in that**

    - lamellar particles have a form factor F defined as the ratio of the largest dimension (L) in the plane of the particle to its thickness (e) such as: $10 \leq F \leq 1000$; $0,01\ \mu m \leq L \leq 500\ \mu m$; and $0,001\ \mu m \leq e \leq 1\ \mu m$, dimension L and thickness e being determined by transmission electron microscopy,
    - and **in that** it comprises the following steps:

      A. grinding of at least one coated film comprising at least one polyester and/or polyolefin film and at least one coating film based on at least one metal and/or at least one metal oxide, to obtain flakes,
      B. optionally compacting the flakes resulting from grinding to form agglomerates,
      C. melting of the flakes or agglomerates resulting from compacting,
      D. cooling/solidification of this molten mass,
      E. transformation of the solidified mass into discrete elements constituting the raw material, preferably into granules.

2.  Method according to claim 1, **characterized in that** the metal and/or the metal oxide of said lamellar particles is selected from the group comprising: aluminium, copper, nickel, gold, silver, and their alloys, oxides of the metals of the aforementioned group, and mixtures thereof.

3.  Method according to claim 1 or 2, **characterized in that** the metal and/or the metal oxide of said lamellar particles is selected from aluminium or his oxides.

4.  Method according to claim 1, 2 or 3, **characterized in that** step C is followed by a filtration to remove the particles of metal and/or of at least one metal oxide, the largest dimension (L) of which is greater than or equal to 10 $\mu m$, preferably greater than or equal to 5 $\mu m$, and, even more preferably, greater than or equal to 3 $\mu m$.

5.  Method for manufacturing a polyester and/or polyolefin film containing lamellar particles based on at least one metal and/or at least one metal oxide, **characterized in that** it comprises the following steps:

      F. manufacture of the film by melt extrusion of a mixture containing a quantity Qb (in wt.%) of said discrete elements, preferably of said granules, resulting from step E of the method according to one of claims 1 to 4,
      G. cooling the film resulting from step F, preferably by means of an applying system, and even more preferably, an electrostatic or air-knife applying system to a cooling drum;

    this step F and this step G being implemented at the end of step E (continuous mode) according to the method of one of claims 1 to 4 or after storage of the discrete elements, preferably of the granules, resulting from step E (batch mode) according to the method of one of claims 1 to 4.

6.  Method according to claim 5, **characterized in that** it comprises the following steps:

      H. longitudinal and transverse stretching of the film resulting from step F or G,
      I. heat-setting of the film resulting from step H at a temperature greater than or equal to 150°C, more preferably between 180 and 250°C and even more preferably at 240°C, when the film is constituted by polyester, and at a temperature greater than or equal to 120°C, more preferably between 130 and 200°C and even more preferably at 150°C, when the film is constituted by polyolefin.

7.  Method according to one of claims 5 to 6, **characterized in that** the Qb quantity in wt.% is such that:

$$20 \le Qb \le 100,$$

preferably $25 \le Qb \le 99$,
and even more preferably $30 \le Qb \le 95$.

8.  Method according to one of claims 5 to 6, **characterized in that** the Qb quantity in wt.% is such that :

$$10^{-1} \le Qb \le 20,$$

preferably $1 \le Qb \le 20$,
and even more preferably $2 \le Qb \le 20$.

9.  Method according to one of claims 5 to 8, **characterized in that** the obtained film is isotropic biaxially stretched or tensilized biaxially stretched or balanced biaxially stretched.

10. Method according to claim 9, **characterized in that** the obtained film has a thickness (e) between 3 and 350 $\mu$m, preferably between 8 and 50 $\mu$m, and even more preferably between 8 and 36 $\mu$m.

11. Method according to one of claims 9 to 10, **characterized in that** the obtained film comprises at least one coating on at least one of its faces, said coating being obtained by coextrusion, coating, extrusion coating, corona treatment under ambient air or gases, vacuum evaporation, plasma treatment or physicochemical vacuum deposition.

FIG. 1a

FIG. 1b

FIG. 1c

FIG. 1d

FIG. 1e

FIG. 2

Densité optique

FIG. 3

Haze

FIG. 4

Indice de blanc

FIG. 5a

L*

FIG. 5b

Brillance

FIG. 6

MOhms.m

FIG. 7

## RÉFÉRENCES CITÉES DANS LA DESCRIPTION

**Documents brevets cités dans la description**

- JP 2194030 A
- US 3516841 A
- FR 2870477
- US 4041206 A
- EP 0408042 A
- EP 0515096 B

**Littérature non-brevet citée dans la description**

- **JOHN MURPHY.** Additives for plastics on book. Elsevier Advanced Technology, 2001